# EUROPÄISCHE PATENTSCHRIFT

(11) **EP 1 216 801 B1**
(45) Veröffentlichungstag und Bekanntmachung des Hinweises auf die Patenterteilung: **08.06.2005**
(21) Anmeldenummer: 01127088.1
(22) Anmeldetag: 15.11.2001
(51) Int. Cl.: B27K 3/15, B27K 3/08, B27K 3/02

(54) **Verfahren zur Imprägnierung von Holz**
Process for impregnating wood
Procédé d'imprégnation du bois

(30) Priorität: 21.12.2000 DE 10064381
(43) Veröffentlichungstag der Anmeldung: 26.06.2002
(73) Patentinhaber: Marmetschke Michael, Dipl.-Ing., 29386 Hankensbüttel (DE)
(72) Erfinder: Marmetschke Michael, Dipl.-Ing., 29386 Hankensbüttel (DE)
(74) Vertreter: Tergau & Pohl Patentanwälte

(56) Entgegenhaltungen:
- WO-A-94/11167
- WO-A-97/36720
- DE-A- 19 812 407
- NL-A- 8 303 650
- US-A- 5 098 472

## Beschreibung

Die Erfindung betrifft ein Verfahren zur Imprägnierung von Holz in einem Tränkkessel, mittels eines Imprägniermittels, das Imprägnieröl und wenigstens wasserlösliche Polymere als Verdickungsmittel enthält und eine Vorrichtung zur Durchführung dieses Verfahrens.

Gemäß den üblichen Verfahren zur Imprägnierung von Holz wird als Vorstufe der Imprägnierung das zugeführte Imprägnieröl auf eine Temperatur von über 100 °C erwärmt und gehalten, um so das im Holz enthaltene Wasser ausdampfen zu lassen. Das ausgedampfte Wasser wird dann als Kondensat aus dem Tränkkessel abgeleitet. Ein derartiges Verfahren ist beispielsweise das sogenannte verbesserte Rüping-Verfahren, bei dem es sich um das derzeitige Regelverfahren der Bundesbahn und der Bundespost handelt. Dieses Verfahren ist u. a. im "Holzlexikon", 3. Auflage, Band 1, DRW-Verlag Stuttgart, Seite 636, Abschnitt b) beschrieben. Hier ist es nachteilig, daß es bei diesem Verfahren für das abgeleitete Kondensat keine Verwendungsmöglichkeit gibt und daß dieses entsorgt werden muß, wobei zudem hohe Wärmeverluste auftreten.

Aus der US 5 098 472 ist auch bereits ein Verfahren bekannt geworden, bei dem aus Imprägnieröl, Pigmenten und wasserlöslichen Polymeren unter Zusatz von Wasser in einem Emulgiertank eine Imprägnieremulsion hergestellt wird. Zur Imprägnierung des Holzes wird die Imprägnieremulsion dann dem Tränkkessel zugeführt. Hier ist es nachteilig, daß zur Herstellung einer stabilen, d. h. lagerfähigen Emulsion, Fremdstoffe zugesetzt werden müssen, die das Penetrationsvermögen des Öles behindern. Insgesamt ist die Herstellung der Emulsion hier aufwendig und langwierig. Im übrigen ist die Wasserphase innerhalb der fertigen Imprägnieremulsion sehr temperaturanfällig und neigt während des Imprägniervorganges zu schnellem Auskochen bei Temperaturen ab ca. 90 Grad, so daß es während und nach der Imprägnation zu unerwünschten Pigmentabsetzungen kommt. Im übrigen ist die hier beschriebene Imprägnieremulsion nicht dazu in der Lage, feuchtes oder gar nasses Holz zu imprägnieren, da dies zu einer Störung des Öl/Wassergleichgewichts der Emulsion führt und diese zerstört wird. Das Holz muß hier in der Regel in einer aufwendigen vorgeschalteten Verfahrensstufe vorgetrocknet werden.

Aus der DE 198 12 407 A1 ist auch bereits ein Verfahren bekannt geworden, bei dem aus Imprägnieröl, Pigmenten und wasserlöslichen Polymeren, unter Zusatz von Wasser, vorab eine Imprägnieremulsion hergestellt wird. Hier wird ein Zusatzstoff unter Einwirkung von Scherkräften der Wasser- oder der Ölphase zugeführt, bzw. zunächst die Emulsion durch zusammenführen der Wasser- und der Ölphase erzeugt und anschließend ein Zusatzstoff unter Einwirkung von Scherkräften der Emulsion zugeführt. Gemäß dem beschriebenen Verfahren wird bei der Herstellung von Imprägniermitteln bereits eine einfache, wenig aufwendige und flexible Zugabe von Zusatzstoffen ermöglicht.

Der Erfindung liegt die Aufgabe zugrunde, ein Verfahren zu schaffen, das es ermöglicht, auch feuchtes oder sogar nasses Holz zu imprägnieren, ohne daß es erforderlich ist, das Holz in einem vorgeschalteten Arbeitsgang zu trocknen und Kondensat zu entsorgen.

Diese Aufgabe wird durch das Verfahren gemäß Anspruch 1 sowie durch die Vorrichtung gemäß Anspruch 12 gelöst. Die weitere Ausgestaltung der Erfindung ist den Unteransprüchen zu entnehmen.

Indem das Imprägnieröl, die Pigmente und die wasserlöslichen Polymere in einen Dispergiertank eingegeben werden und dort eine Dispersion hergestellt, die Dispersion erwärmt, sowie in den Tränkkessel mit dem zu imprägnierenden Holz mit einer Temperatur von wenigstens 100 °C eingeleitet und dort in einer Aufheizphase unter ständiger Umwälzung bei einer Temperatur von 100 bis 130 °C gehalten wird, wobei dem Holz Wasser entzogen und teilweise von den Polymeren gebunden wird, und die Dispersion einer Scherkraft ausgesetzt wird, wobei aufgrund der Einwirkung der Scherkraft die Polymere aufgespalten werden, d. h. deren Oberfläche zur zusätzlichen Wasseraufnahme vergrößert wird, und das Imprägniermittel mittels eines oder mehrerer Druckzyklen in das Holz eingebracht wird, ist es möglich geworden, in einem einzigen Verfahrensschritt dem Holz Wasser zu entziehen, das Wasser in das Imprägniermittel einzuarbeiten und das Imprägniermittel in das Holz einzubringen. Aus dem Effekt, daß das aus den Poren des Holzes austretende Zellwasser unter Einwirkung der Scherkraft durch die Polymere gebunden wird, ergibt sich der große Vorteil, daß das gebundene Zellwasser in das Holz eindringen kann und dort in etwa gleicher Imprägniermittelmenge das Volumen des verdampften Wassers einnimmt. Das Zellwasser wird ohne jede Aufbereitung in idealer Weise für die Imprägnierung genutzt, indem es die Pigmente in feinster Verteilung zusammen mit Imprägnieröl in das Holz einbringt. Es werden im übrigen die anatomischen Eigenschaften des Holzes in der Form genutzt, daß vom Holz jeweils die erforderliche Menge Zellwasser, die gleich ist der einzubringenden Imprägniermittelmenge, selbsttätig bereitgestellt wird. So tritt z. B. aus Splint- und Reifholzarten bei der Dehydrierung mehr Zellwasser aus als aus Kernholzarten. Es ist gemäß dem erfindungsgemäßen Verfahren in vorteilhafter Weise möglich, dieses Zellwasser in gleicher Menge bei der Imprägnierung in das Holz einzubringen.

Vorteilhaft kann es sein, wenn der Wasseranteil in der Dispersion gemessen und spätestens bei Erreichen eines Wasseranteils von 20 bis 30 Volumen% die Dispersion einer Scherkraft ausgesetzt wird.

In der Regel werden dem Imprägniermittel Pigmente als Mittel zum Schließen der Poren des Holzes zugegeben. Die Zugabe erfolgt vorzugsweise bereits im Dispergiertank. Alternativ ist es jedoch auch möglich, die Pigmente in den Tränkkessel einzugeben.

In weiterer Ausgestaltung der Erfindung ist es vorgesehen, daß dem Imprägniermittel im Tränkkessel zusätzlich wasserlösliche Polymere und/oder Wasser zugegeben werden können. Es ist so eine Anpassung des Verfahrens an den jeweiligen Zellwassergehalt des in den Tränkkessel eingegebenen Holzes auch während des Imprägnierens möglich. Die Zugabe wasserlöslicher Polymere kann dann vorteilhaft sein, sofern es sich zeigt, daß der Zellwassergehalt des Holzes höher als erwartet ist. Ein Wasserzusatz kann vorteilhaft sein, sofern Holz mit einem höheren als zu erwartenden Trocknungsgrad imprägniert wird.

Insbesondere bei gut durchtränkbaren Hölzern wie Buche, Birke, etc. kann es vorteilhaft sein, zur optimalen Durchtränkung im Tränkkessel mittels der Scherkrafteinheit eine Imprägnieremulsion herzustellen. Hier ist es erforderlich, die im Tränkkessel befindliche Imprägnierdispersion über die Scherkrafteinheit einer erhöhten Scherkraft auszusetzen.

In weiterer Ausgestaltung der Erfindung ist es vorgesehen, daß dem Imprägniermittel als wasserlösliches Polymer eine Polyacrylsäure oder ein Polysaccharid einem Anteil von 0,03 bis 0,5 Gewichts% zugegeben wird. Die hier eingesetzten wasserlöslichen Polymere, vorzugsweise die Polyacrylsäure, wirken als dehydrierende Komponente und unterstützen durch die Anbindung des Wassers den Austritt des Zellwassers aus dem Holz. Je mehr Zellwasser chemisch gebunden wird, desto schneller kann Zellwasser unproblematisch und ohne Bildung freien Wassers aus dem Holz in das Imprägniermittel entweichen. Das Imprägniermittel kann schneller als in bisherigen Imprägnierprozessen aufgeheizt und auf die Imprägniertemperatur gebracht werden, da nicht wie bisher unnötiges abzuführende Kondensat zu Wärmeverlusten führt. Das Kondensat bewirkt hier, daß die Carboxylgruppen der Polyacrylsäuren aufgrund der Dipolwirkung zwischen den Gruppen und Wasserdipolen aufgerichtet werden. Das Wasser wird durch Dipolanbindung gespeichert.

Sofern trocknes Holz, aus dem während des Imprägnierprozesses wenig Wasser austritt, imprägniert werden soll, so kann es vorteilhaft sein, dem Imprägniermittel zur Neutralisation der Polyacrylsäure Triethanolamin oder ähnlich wirkende Stoffe zuzusetzen. Durch das Triethanolamin wird die das Pigment tragende Struktur der Polymere, wie z. B. der Polyacrylsäure, gleichfalls aufgerichtet. Alternativ kann jedoch durchaus auch eine Wasserzumischung erfolgen.

In weiterer Ausgestaltung der Erfindung ist es vorgesehen, daß die Einwirkung der Scherkraft während der Einwirkung des Imprägniermittels auf das Holz reduziert wird, derart, daß die Imprägniermittelemulsion zerfällt und daß zum Aushärten hydrophobe Stoffe zugegeben werden, die während der Endbehandlung des Holzes zur Oberflächenversiegelung einwirken. Das dann in die Dispersion eingelagerte Feinpigment lagert sich dann vorzugsweise an der Holzoberfläche oder an den äußeren Porengängen des Holzes ab. Vorzugsweise werden hier Wachse, Silikone oder Polymere zugegeben, die die Feinpigmente fixieren bzw. gleichfalls die Oberfläche des Holzes versiegeln.

Vorteilhaft ist es weiterhin, wenn die Dispersion nach Abschluß der Imprägnierung aus dem Tränkkessel in den Dispergiertank geleitet und so für weitere Imprägniervorgänge verwendbar ist. Vorzugsweise erfolgt im Dispergiertank eine Aufbereitung der Dispersion, wobei je nach Bedarf Imprägnieröl, wasserlösliche Polymere und/oder Pigmente ergänzend zugegeben und dispergiert werden. Alternativ ist es auch möglich, die Dispersion im Tränkkessel aufzubereiten.

In weiterer Ausgestaltung der Erfindung ist es vorgesehen, daß in der Vorrichtung ein Dispergiertank mit einer Dispergiervorrichtung angeordnet ist und daß den Tränkkessel, in den die im Dispergiertank aufbereitete Imprägniermitteldispersion einleitbar ist, wenigstens eine Schereinheit zugeordnet ist. Vorzugsweise ist die Scherkraft der dem Tränkkessel zugeordneten Scherkrafteinheit einstellbar. Es kann so wahlweise im Tränkkessel die Dispersion aufrechterhalten und stabilisiert oder aber eine Emulsion hergestellt und stabil gehalten werden. Es ist somit möglich, den Imprägniervorgang an die jeweiligen Erfordernisse anzupassen.

Vorteilhaft ist es, wenn an der Scherkrafteinheit wenigstens eine Zuführleitung zur Eingabe der Zusatzstoffe, wie der Pigmente oder z. B. der Wachse und Silikone, angeordnet ist.

Gemäß einem bevorzugten Ausführungsbeispiel ist die Scherkrafteinheit an einer an den Tränkkessel geführten Zuleitung als Bypass angeordnet. Vorteilhaft ist es außerdem, wenn die Scherkraft der dem Tränkkessel zugeordneten Scherkrafteinheit einstellbar ist.

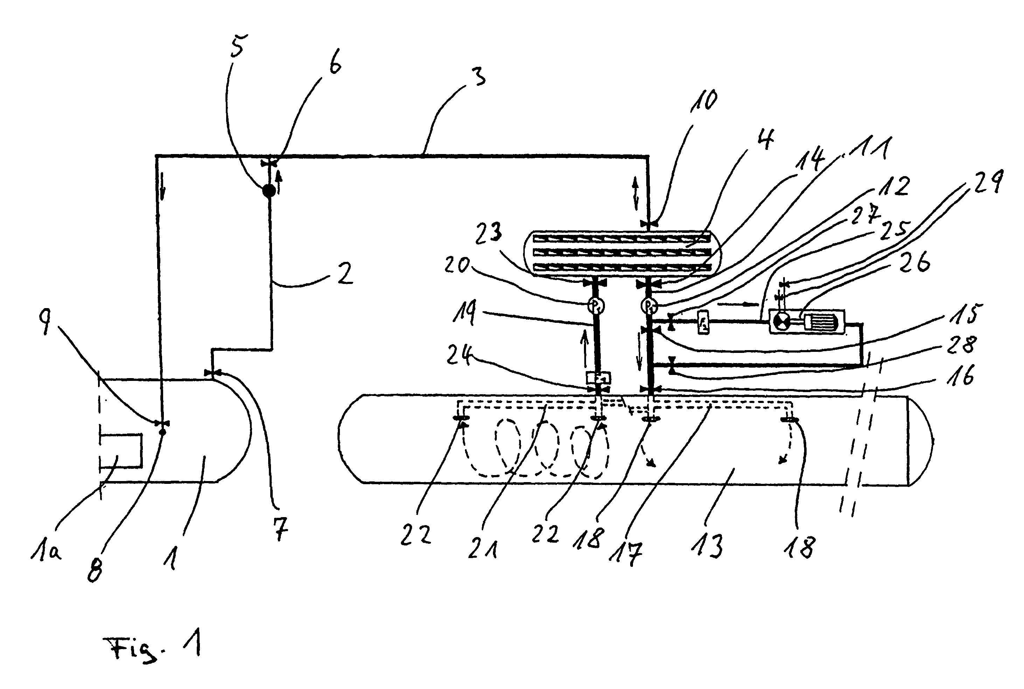

Im folgenden wird die Erfindung anhand eines Ausführungsbeispiels näher erläutert. Die Zeichnung zeigt eine Vorrichtung zur Imprägnierung von Holz in einem Tränkkessel in schematischer Darstellung.

Die Vorrichtung gemäß der Figur der Zeichnung weist einen Dispergiertank 1 auf, der über Rohrleitungen 2 und 3 mit einem Wärmetauscher 4 verbunden ist. In der Rohrleitung 2 ist eine Förderpumpe 5 angeordnet. Die Rohrleitung 2 ist über Ventile 6 und 7 absperrbar. Die Rohrleitung 3 ist im übrigen als Rückströmleitung an den Dispergiertank 1 geführt. Vor einem Einlaß 8 des Dispergiertanks 1 ist ein Ventil 9 angeordnet.

In der Rohrleitung 3 ist vor dem Wärmetauscher 4 ein Ventil 10 zum Absperren der Rohrleitung 3 angeordnet. Vom Wärmetauscher 4 ist eine Rohrleitung 11, in der eine Pumpe 12 angeordnet ist, in einen Tränkkessel 13 geführt. In der Rohrleitung 11 sind Ventile 14, 15 und 16 angeordnet. An die Rohrleitung 11 schließen sich im Tränkkessel 13 über dessen gesamte Länge geführte Verteilerrohre 17 mit Ausströmdüsen 18 an.

Vom Tränkkessel 13 ist eine Absaugleitung 19, in der eine Pumpe 20 angeordnet ist, an den Wärmetauscher 4 geführt. Im Tränkkessel 13 schließt sich an die Absaugleitung 19 ein Verteilerrohr 21 an, an dem Absaugdüsen 22 angeordnet sind. Zwei in der Absaugleitung 19 angeordnete Ventile 23 und 24 ermöglichen es, diese abzusperren.

Von der in den Tränkkessel 13 geführten Rohrleitung 11 zweigt als Bypass eine Rohrleitung 25 ab, in der eine Scherkrafteinheit 26 angeordnet ist. In der Rohrleitung 25 sind beidseitig der Scherkrafteinheit 26 Ventile 27 und 28 angeordnet. Falls erforderlich, können auch mehrere Scherkrafteinheiten 26 angeordnet sein. In die Scherkrafteinheit 26 münden zwei Zuführleitungen 29 zur Eingabe der Zusatzstoffe, wie der Pigmente oder z. B. der Wachse und Silikone, ein.

Um das erfindungsgemäße Verfahren durchzuführen, kann die Vorrichtung gemäß der Figur der Zeichnung beispielsweise derart verwendet werden, daß in den Dispergiertank 1 das Imprägniermittel, d. h. Imprägnieröl-, Pigment- und wasserlösliche Polymere, als Verdikkungsmittel ohne Zugabe von Wasser eingegeben werden und dort durch Aktivierung der Dispergiervorrichtung 1a eine Dispersion hergestellt wird. Die Dispersion wird erwärmt und nach Öffnen der Ventile 7, 6 und 10 unter Einschalten der Förderpumpe 5 über die Rohrleitungen 2 und 3 in den Wärmetauscher 4 gefördert. Nach Öffnen der Ventile 14, 15 und 16 gelangt die auf wenigstens 100 °C vorgewärmte Dispersion über die Zuleitung 11 in den Tränkkessel 13. Im Tränkkessel 13 erfolgt die Verteilung der Dispersion über Verteilerrohre 17 mit Ausströmdüsen 18. In den Tränkkessel 13 wurde vor dem Einleiten der Dispersion in der Zeichnung nicht dargestelltes Holz eingebracht.

Durch die Vorwärmung der Dispersion wird verhindert, daß das in den Tränkkessel 13 eingebrachte Imprägnieröl in den Rohrleitungen und den Ventilen kristallisiert und diese zusetzt. In einer sich anschließenden Aufheizphase wird die Dispersion nach Öffnen der Ventile 24 und 23 der Absaugleitung 19 mittels der Pumpe 20 in einem Kreislauf zum Aufheizen durch den Wärmetauscher 4 und über die Zuleitung 11 zurück in den Tränkkessel gepumpt. Vorher wurde das Ventil 10 der Rohrleitung 3 oberhalb des Wärmetauschers 4 geschlossen. In dieser Aufheizphase wird die Temperatur auf 100 bis 130 °C gebracht, und dann gehalten.

Während der Aufheizphase tritt aus dem Holz Wasser in die Dispersion aus. Spätestens bei Erreichen eines Wasseranteils in der Dispersion von 30 Volumen% wird nach Absperren des Ventils 15 und Öffnen der Ventile 27 und 28 die zu der Scherkrafteinheit 26 führende Rohrleitung 25 geöffnet und die Scherkrafteinheit 26 zugeschaltet. Mittels der Scherkrafteinheit 26 wird das Wasser in die Dispersion eingearbeitet, zusätzlich die Dispersion stabilisiert, da auch die Pigmente und wasserlöslichen Polymere in feiner Verteilung gehalten werden. Mittels der Scherkrafteinheit 26 kann insbesondere, sofern gut durchtränkbare Hölzer, wie Buche oder Birke imprägniert werden sollen, eine Emulsion aufbereitet werden, die in an sich bekannter Weise ein tiefes Eindringen der Pigmente in das Holz ermöglicht. Es ergibt sich im übrigen der Effekt, daß die eingeleitete Scherenergie zusätzlich im Verfahren zur Temperatursteuerung eingesetzt werden kann. Sofern schlecht durchtränkbare Hölzer, wie z. B. Eiche, imprägniert werden sollen, reicht es häufig aus, mittels der Dispersion zu imprägnieren. Im übrigen folgt am Ende der Aufheizphase des Holzes eine Druckbeaufschlagung zum Einbringen der im Tränkkessel aufbereiteten Dispersion bzw. der Emulsion in das Holz.

Sofern im Tränkkessel 13 eine Emulsion aufbereitet wurde, ergibt sich die Möglichkeit, die Einwirkung der Scherkraft der Scherkrafteinheit 26 zu reduzieren und die Emulsion während des Imprägniervorganges zu einer Dispersion zerfallen zu lassen. Es kann so während der Endbehandlung des Holzes unter gleichzeitiger nochmaliger Druckeinwirkung eine zusätzliche Hydrophobierung des Holzes unter Zuführung von z. B. aushärtenden Wachsen, Silikonen oder Polymeren in die Scherkrafteinheit erzielt werden.

Nach Abschluß der Imprägnierung wird die Dispersion nach Öffnen der entsprechenden Ventile 24, 23, 10 und 9 über die Rohrleitungen 19, 3 in den Dispergiertank rückgefördert. Dort ist dann eine Aufbereitung der Dispersion in der Form möglich, daß je nach Bedarf Imprägnieröl, wasserlösliche Polymere und Pigmente ergänzend zugegeben und dispergiert werden.

Das erfindungsgemäße Verfahren zeichnet sich dadurch aus, daß eine permanente Wassereinbindung in die Dispersion bzw. in die Emulsion während des Dehydrierens und Imprägnierens des Holzes erreicht wird. Das Wasser kann nicht mehr auskochen und dient aufgrund seiner Einbindung in das Imprägniermittel als optimierendes Tränkmittel zur optimalen Pigmentverteilung sowie einem späteren Feuchtegleichgewicht im Holz. Das Wasser kann nach der Imprägnierung und damit Konservierung langsam austrocknen, wobei abschließend Öle und Pigmente als versiegelnde Schicht im Holz tiefenwirksam verbleiben.

Mittels des erfindungsgemäßen Verfahrens ist aufgrund des hohen Wasseranteils eine Spartränkung erzielbar. Der hohe Wasseranteil ermöglicht eine Reduzierung der toxischen Anteile und deren gute und gleichmäßige Verteilung im Holz. Das Wasser kann später austreten, wobei ein im Verhältnis zum Volumen des Holzes geringer Anteil an toxischen Stoffen gegen Auswaschung geschützt im Holz verbleibt.

## Patentansprüche

1. Verfahren zur Imprägnierung von Holz in einem Tränkkessel (13), mittels eines Imprägniermittels, das Imprägnieröl und wenigstens wasserlösliche Polymere als Verdickungsmittel enthält, **dadurch gekennzeichnet, daß**
- das Imprägnieröl, und die wasserlöslichen Polymere in einen Dispergiertank (1) eingegeben werden und dort eine Dispersion hergestellt wird,
- die Dispersion erwärmt, in den Tränkkessel (13) mit dem zu imprägnierenden Holz mit einer Temperatur von wenigstens 100 °C eingeleitet und dort in einer Aufheizphase unter ständiger Umwälzung bei einer Temperatur von 100 bis 130 °C gehalten wird, wobei dem Holz Wasser entzogen und teilweise von den Polymeren gebunden wird,
- die Dispersion einer Scherkraft ausgesetzt wird, wobei aufgrund der Einwirkung der Scherkraft die Polymere aufgespalten, d. h. deren Oberfläche zur zusätzlichen Wasseraufnahme vergrößert wird,
- das Imprägniermittel mittels eines oder mehrerer Druckzyklen in das Holz eingebracht wird.

2. Verfahren nach Anspruch 1, **dadurch gekennzeichnet, daß** der Wasseranteil in der Dispersion gemessen wird und spätestens bei Erreichen eines Wasseranteils von 20 bis 30 Volumen % die Dispersion einer Scherkraft ausgesetzt wird.

3. Verfahren nach wenigstens einem der vorhergehenden Ansprüche, **dadurch gekennzeichnet, daß** dem Imprägniermittel Pigmente zugegeben werden.

4. Verfahren nach wenigstens einem der vorhergehenden Ansprüche, **dadurch gekennzeichnet, daß** dem Imprägniermittel im Tränkkessel (13) zusätzlich wasserlösliche Polymere und/oder Wasser zugegeben werden.

5. Verfahren nach wenigstens einem der vorhergehenden Ansprüche, **dadurch gekennzeichnet, daß** im Tränkkessel (13) mittels der Scherkrafteinheit eine Imprägnieremulsion hergestellt wird.

6. Verfahren nach wenigstens einem der vorhergehenden Ansprüche, **dadurch gekennzeichnet, daß** dem Imprägniermittel als wasserlösliches Polymer eine Polyacrylsäure oder ein Polysaccharid in einem Anteil von 0,03 bis 0,5 Gewichts % zugegeben wird.

7. Verfahren nach Anspruch 6, **dadurch gekennzeichnet, daß** als Neutralisator der Polyacrylsäure ein Triethanolamin zugegeben wird.

8. Verfahren nach wenigstens einem der vorhergehenden Ansprüche, **dadurch gekennzeichnet, daß** die Einwirkung der Scherkraft während der Einwirkung des Imprägniermittels auf das Holz reduziert wird, derart, daß die Imprägniermittelemulsion zerfällt und daß zum Aushärten hydrophobe Stoffe zugegeben werden, die während der Endbehandlung des Holzes zur Oberflächenversiegelung einwirken.

9. Verfahren nach Anspruch 8, **dadurch gekennzeichnet, daß** als aushärtende hydrophobe Stoffe Wachse, Silikone oder Polymere zugegeben werden.

10. Verfahren nach wenigstens einem der vorhergehenden Ansprüche, **dadurch gekennzeichnet, daß** die Dispersion nach Abschluß der Imprägnierung aus dem Tränkkessel (13) in den Dispergiertank (1) geleitet und somit für weitere Imprägniervorgänge verwendbar ist.

11. Verfahren nach Anspruch 10, **dadurch gekennzeichnet, daß** eine Aufbereitung der Dispersion erfolgt, wobei je nach Bedarf Imprägnieröl, wasserlösliche Polymere und/oder Pigmente ergänzend zugegeben und dispergiert werden.

12. Vorrichtung zur Durchführung des Verfahrens nach wenigstens einem der vorhergehenden Ansprüche, **dadurch gekennzeichnet, daß** ein Dispergiertank (1) mit einer Dispergiervorrichtung (1a) angeordnet ist, und daß dem Tränkkessel (13), in den die im Dispergiertank (1) aufbereitete Imprägniermitteldispersion einleitbar ist, eine Scherkrafteinheit (26) zugeordnet ist.

13. Vorrichtung nach Anspruch 12, **dadurch gekennzeichnet, daß** an der Scherkrafteinheit (26) wenigstens eine Zuführleitung (29) angeordnet ist.

14. Vorrichtung nach Anspruch 12, **dadurch gekennzeichnet, daß** die Scherkraft der dem Tränkkessel (13) zugeordneten Scherkrafteinheit (26) einstellbar ist.

15. Vorrichtung nach Anspruch 12, **dadurch gekennzeichnet, daß** die Scherkrafteinheit (26) an einer an den Tränkkessel (13) geführten Zuleitung (25) als Bypass angeordnet ist.

## Claims

1. Method for impregnating wood in a impregnating tank (13) by means of an impregnating agent containing impregnating oil and at least water-soluble polymers as the thickener, **characterised in that**
- the impregnating oil and the water-soluble polymers are introduced into a dispersing tank (1) where a dispersion is produced,
- the dispersion is heated, introduced at a temperature of at least 100 °C with the wood to be impregnated into the impregnating tank (13) where it is held in a heating phase at a temperature of 100 to 130 °C with continuous revolution, water being removed from the wood and being partially bound by the polymers,
- the dispersion is exposed to a shear force, the polymers being cleaved owing to the effect of the shear force, in other words the surface thereof is increased for additional water absorption,
- the impregnating agent is introduced into the wood by means of one or more pressure cycles.

2. Method according to claim 1, **characterised in that** the water content of the dispersion is measured and, at the latest after achieving a water content of 20 to 30 vol. %, the dispersion is exposed to a shear force.

3. Method according to at least one of the preceding claims, **characterised in that** pigments are added to the impregnating agent.

4. Method according to at least one of the preceding claims, **characterised in that** water-soluble polymers and/or water is/are additionally added to the impregnating agent in the impregnating tank (13).

5. Method according to at least one of the preceding claims, **characterised in that** an impregnating emulsion is produced in the impregnating tank (13) by means of the shear force unit.

6. Method according to at least one of the preceding claims, **characterised in that** a polyacrylic acid or a polysaccharide is added to the impregnating agent as a water-soluble polymer in a content of 0.03 to 0.5 % by weight.

7. Method according to claim 6, **characterised in that** a triethanolamine is added to the polyacrylic acid as a neutraliser.

8. Method according to at least one of the preceding claims, **characterised in that** the action of the shear force is reduced during the action of the impregnating agent on the wood such that the impregnating agent emulsion disintegrates and that hydrophobic substances which seal the surface during final treatment of the wood are added for curing.

9. Method according to claim 8, **characterised in that** waxes, silicones or polymers are added as the curing hydrophobic substances.

10. Method according to at least one of the preceding claims, **characterised in that**, after impregnation has ended, the dispersion is conveyed from the impregnating tank (13) into a dispersing tank (1) and can thus be used for further impregnation processes.

11. Method according to claim 10, **characterised in that** the dispersion is prepared, impregnating oil, water-soluble polymers and/or pigments additionally being added and dispersed as required.

12. Device for carrying out the method according to at least one of the preceding claims, **characterised in that** a dispersing tank (1) with a dispersing device (1a) is arranged and **in that** a shear force unit (26) is associated with the impregnating tank (13) into which the impregnating agent dispersion prepared in the dispersing tank (1) can be introduced.

13. Device according to claim 12, **characterised in that** at least one supply line (29) is arranged on the shear force unit (26).

14. Device according to claim 12, **characterised in that** the shear force of the shear force unit (26) associated with the impregnating tank (13) can be adjusted.

15. Device according to claim 12, **characterised in that** the shear force unit (26) is arranged, as a bypass, on a feed line (25) guided to the impregnating tank (13).

## Revendications

1. Procédé pour l'imprégnation du bois dans un autoclave (13), au moyen d'un agent d'imprégnation, qui contient une huile d'imprégnation et au moins des polymères hydrosolubles en tant qu'agents de durcissement, **caractérisé en ce que**
- l'huile d'imprégnation et les polymères hydrosolubles sont ajoutés dans une cuve de dispersion (1) et **en ce qu'**une dispersion s'y produit,
- la dispersion est chauffée, introduite dans l'autoclave (13) avec le bois à imprégner à une température d'au moins 100 C et elle y est maintenue dans une phase de chauffage sous brassage constant à une température allant de 100 à 130 C, l'eau étant extraite du bois et partiellement liée par les polymères,
- la dispersion est exposée à une force de cisaillement, moyennant quoi les polymères se dissocient sous l'effet de la force de cisaillement, à savoir, leur surface est augmentée pour permettre l'absorption supplémentaire d'eau,
- l'agent d'imprégnation est appliqué au moyen d'un ou de plusieurs cycles de pression dans le bois.

2. Procédé selon la revendication 1, **caractérisé en ce que** la proportion d'eau dans la dispersion est mesurée et la dispersion est exposée à une force de cisaillement au plus tard une fois une portion d'eau de 20 à 30 % en volume atteinte.

3. Procédé selon au moins une quelconque des revendications précédentes, **caractérisé en ce que** des pigments sont ajoutés à l'agent d'imprégnation.

4. Procédé selon au moins une quelconque des revendications précédentes, **caractérisé en ce que** des polymères hydrosolubles et/ou de l'eau sont en outre ajoutés à l'agent d'imprégnation dans l'autoclave (13).

5. Procédé selon au moins une quelconque des revendications précédentes, **caractérisé en ce que** dans l'autoclave (13) au moyen de l'unité de force de cisaillement, on produit une émulsion d'imprégnation.

6. Procédé selon au moins une quelconque des revendications précédentes, **caractérisé en ce qu'**on ajoute à l'agent d'imprégnation un acide polyacrylique ou un polysaccharide en tant que polymère hydrosoluble dans une proportion de 0,03 à 0,5 % en poids.

7. Procédé selon la revendication 6, **caractérisé en ce qu'**on ajoute une triéthanolamine en tant que neutralisateur à l'acide polyacrylique.

8. Procédé selon au moins une quelconque des revendications précédentes, **caractérisé en ce que** l'influence de la force de cisaillement sur le bois est réduite durant l'influence de l'agent d'imprégnation, de sorte que l'émulsion de l'agent d'imprégnation disparaisse et que des substances hydrophobes soient ajoutées pour le durcissement, lesquelles agissent durant le traitement final du bois en vue d'imperméabiliser la surface.

9. Procédé selon la revendication 8, **caractérisé en ce que** l'on ajoute des résines, des silicones ou des polymères, en tant que substances hydrophobes durcissantes.

10. Procédé selon au moins une des revendications précédentes, **caractérisé en ce que** la dispersion est dirigée une fois l'imprégnation terminée à l'extérieur de l'autoclave (13) dans une cuve de dispersion (1) et par conséquent qu'elle peut être utilisée pour d'autres procédés d'imprégnation.

11. Procédé selon la revendication 10, **caractérisé en ce que** l'on procède au traitement de la dispersion moyennant quoi on ajoute et disperse, en fonction du besoin, de l'huile d'imprégnation, des polymères hydrosolubles et/ou des pigments en plus .

12. Dispositif pour la réalisation du procédé selon au moins une quelconque des revendications précédentes, **caractérisé en ce qu'**un réservoir de dispersion (1) est agencé avec un dispositif de dispersion (1a), et qu'une unité de force de cisaillement (26) est allouée à l'autoclave (13) dans laquelle cuve, la dispersion de l'agent d'imprégnation traité dans le réservoir d'imprégnation (1) peut être introduite.

13. Dispositif selon la revendication 12, **caractérisé en ce qu'**au moins une conduite d'alimentation (29) est agencée au niveau de l'unité de la force de cisaillement (26).

14. Dispositif selon la revendication 12, **caractérisé en ce que** la force de cisaillement de l'autoclave l'unité de force de cisaillement (26) attribuée à l'autoclave (13) peut être régulée.

15. Dispositif selon la revendication 12, **caractérisé en ce que** l'unité de force de cisaillement (26) est agencée au niveau d'une conduite (25) dirigée vers l'autoclave (13) par une soupape de dérivation.
